# EUROPEAN PATENT APPLICATION

(11) **EP 4 825 691 A1**
(43) Date of publication of application: **21.10.2026**
(21) Application number: 25170914.3
(22) Date of filing: 16.04.2025
(51) Int. Cl.: B60W 40/09

(54) **METHOD AND SYSTEM FOR DETECTING AND MONITORING THE DRIVING BEHAVIOUR OF A VEHICLE DRIVER**

(71) Applicant: Wego S.r.l., 36100 Vicenza (IT)
(72) Inventor: FILIPPI, Marco, Msida, 02013 (MT); ALAO, Olukayode, 1082JN Amsterdam (NL); IOZZO, Felice, I-89034 Bovalino (RC) (IT); ALPARSLAN, Emre Yigit, 52200 Altinordu/ORDU (TR)
(74) Representative: Dragotti & Associati S.P.A.

(57) **Abstract**

Method and system for detecting and monitoring the driving behavior of a driver (2) of a vehicle, comprising a step of creating an ideal twin digital profile (6) of the driver (2) to which are associated certain driving behavior parameters, detected during a first predefined time period, and creating a real profile (7) of the driver (2) with which are associated the same driving behavior parameters detected during a second time period. Following the comparison, it is planned to update the data contained in said ideal twin digital profile (6) according to said detected differences.

## Description

### Technical Field

The present invention relates to a method and system for detecting and monitoring the driving behavior of a driver of a vehicle.

In particular, the present method and system preferably refer to the collection of data related to a driver's driving behavior in order to monitor and be able to calculate his or her improving or worsening performance.

### State of Art

In particular, the present invention applies in the field of *car sharing* or more generally to the field of *shared mobility,* including short- or long-term car rentals, where cars are used by several different drivers with different driving styles and behaviors.

In the above-mentioned fields, there is a need to detect increasingly detailed driver driving parameters such as, for example: speed, acceleration, braking, compliance with road rules, ... in order to determine:
- a user's driving style;
- a "rating" associated with that user;
- the degree of wear and tear on the vehicle;
- maintenance to be proposed for the vehicle;
- ...

Within this framework, it is necessary to classify a user's driving behavior more and more accurately to provide car owners and or rental services, and/or insurance companies with enough data to assess possible accident/damage risks associated with a user and/or a vehicle.

Moreover, since it has been observed that users who engage with rental services often return to use them again over time, a problem also emerged that the same user may change his/her driving style over time and can therefore either improving or worsening his/her performances.

### Scopes of the Invention

The technical task of this invention is to offer a method and system for detecting and monitoring driving behavior of a driver of a vehicle that can overcome the inconveniences revealed by the known art.

An object of the present invention is therefore to provide a method and a system for detecting and monitoring the driving behavior of a driver of a vehicle which allows to improve the overall assessment of the driving behavior of the user. Further, an object of the present invention is thus to make available a method and a system for detecting and monitoring the driving behavior of a driver of a vehicle which enables updating the driving conditions of a driver. The specified technical task and the specified objects are substantially achieved by a method and a system for detecting and monitoring the driving behavior of a driver of a vehicle comprising the technical features set forth in one or more of the attached claims.

These goals are achieved through the method and system described in the claims. The dependent claims corresponds to possible embodiments of the invention.

Further features and advantages of the present invention will appear clearer from the indicative, and therefore non-limiting, description of an embodiment of a method and a system for detecting and monitoring the driving behavior of a driver of a vehicle.

### Brief description of the figures

This description will be set forth below with reference to the attached drawings, provided for illustrative purposes only and, therefore, not limiting, in which:

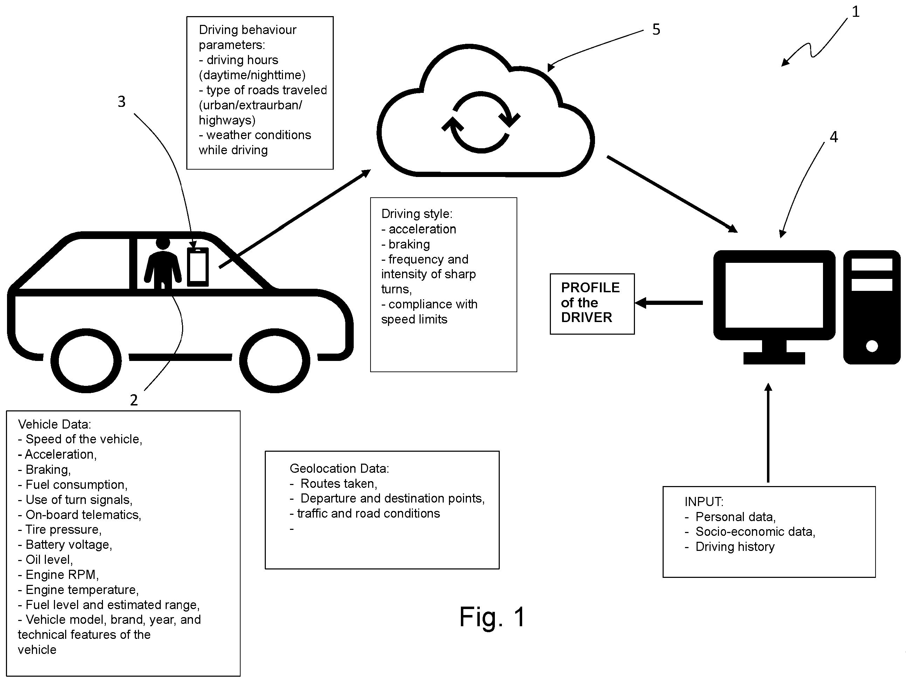

- Figure 1 is a schematic representation of a system for detecting a driver's behavior according to the present invention;

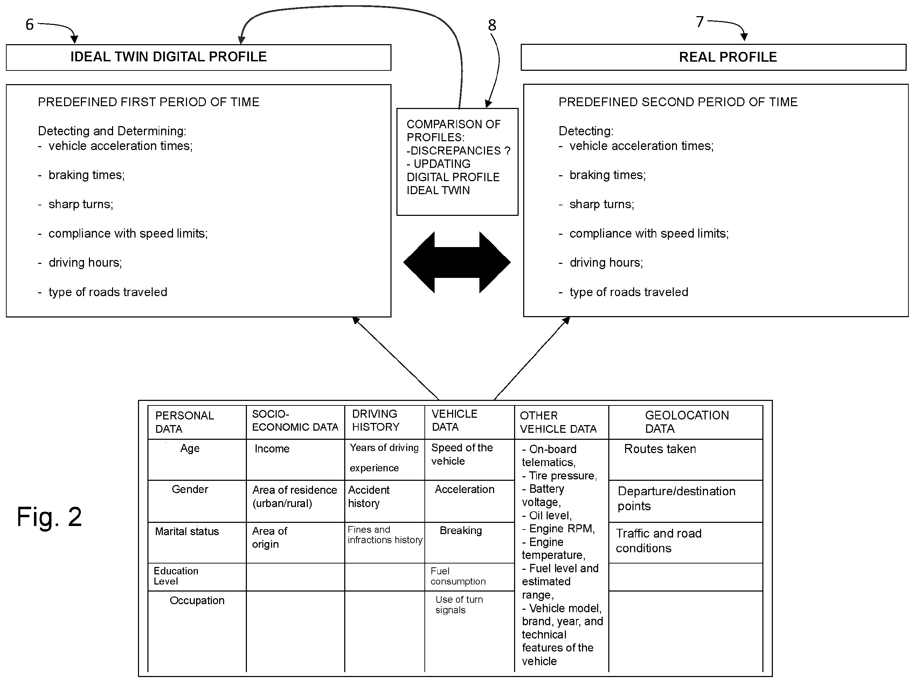

- Figure 2 is a schematic representation of the steps of a method for detecting a driver's behavior according to the present invention.

### Detailed Description of at least a Preferred Embodiment of the present invention

Referring to the attached figures, a method and a system for detecting and monitoring the behavior of a vehicle driver 2 has been collectively referred as 1.

The method comprises first of all, a step of detecting, during a predefined first period of time, through one or more sensors 3 (e.g., accelerometer, gyroscope, ...), one or more of the following driving behavior parameters:
- vehicle acceleration times imposed by the driver 2;
- braking times;
- sharp turns;
- compliance with speed limits;
- driving hours;
- type of roads traveled.

These data are then cross-referenced with other personal data to create an ideal twin digital profile 6 of the driver 2. Said other personal data are:
- personal data of the driver 2 (Age, Gender, Marital status, Education level, Occupation);
- socio-economic data of the driver 2 (Income, Area of residence (urban/rural), Area of origin);
- data concerning past driving experience( Years of driving experience, Accident history, Fines and infractions history).

Additionally, the ideal twin digital profile 6 of the driver 2 also includes other data concerning, for example:
- REFERENCE DATA ON SOCIO-DEMOGRAPHIC FEATURES (e.g., male over 30, college graduate → is mapped to a data benchmark position);
- GEOLOCATION DATA (Routes taken, departure/destination points, traffic and road conditions);
- VEHICLE DATA (Speed of the vehicle, Acceleration, Braking, Fuel consumption, Use of turn signals, On-board telematics, Tire pressure, Battery voltage, Oil level, Engine RPM, Engine temperature, Fuel level and estimated range, Vehicle model, brand, year, technical features of the vehicle).

In essence, the ideal digital twin profile 6 relates to data collected in an first time period (e.g., the past) and also contains data related to the driver 2.

In relation to the benchmark data related to the socio-demographic features of the driver, the method may involve creating a benchmark of reference data based on the personal data entered in order to create positions that correspond to certain driving expectations. For example, a position may correspond to male drivers who are over 30 years old, college graduates, and married, in relation to whom good if not optimal driving behavior is expected.

Then, with each subsequent use of a vehicle (in other words, in a second time period), the method involves repeating the detecting of the same driving behavior parameters (repeated here for convenience):
- vehicle acceleration times;
- braking times;
- sharp turns;
- compliance with speed limits;
- driving hours;
- type of roads traveled;
- use of electronic devices (e.g., smartphone) while driving.

Similarly, the method provides for creating a real profile 7 of the driver 2 (relating precisely to this second time period) with which are associated said driving behavior parameters detected during the second time period and also one or more of the following personal data of the aforementioned driver 2 (personal data of the driver 2, socio-economic data of the driver 2) and possibly also the vehicle data and geolocation data identified above.

According to the present invention, the method provides for comparing 8 said ideal twin digital profile 6 with said real profile 7 and detecting differences at least with respect to one or more of the following parameters:
- vehicle acceleration times;
- braking times;
- sharp turns;
- compliance with speed limits;
- driving hours;
- type of roads driven.

Thus, it is possible to:
- calculate the deviation of the detected values of the same parameter from the ideal twin digital profile 6 in order to evaluate whether for one or more of said parameters the driver 2 has improved or worsened his driving behavior with respect to respective predetermined thresholds of improvement or deterioration;
- update the data contained in said ideal twin digital profile 6 according to said detected differences for the next comparison.

According to a further aspect peculiar to the present invention, said real profile 7 is assigned to a digital container containing assigned points for each drive. The method provides for increasing or decreasing the points contained in said digital container as a function of said evaluation related to the fact that for one or more of said parameters, driver 2 has improved or worsened his driving behavior during the second driving period compared to the first driving period.

It should be noted that the detection phase of the driving sensing parameters takes place via an electronic terminal such as a smartphone 3 (which usually already integrates a GPS and/or gyroscope) or via an electronic device integrated into the car.

It also part of the present invention a system for sensing and monitoring the driving behavior of a driver 2 of a vehicle that is directly descended from the above which is considered herein incorporated in its entirety.

In particular, the system comprises an electronic processor 4 configured to:
- detect, in an first predefined time period, by means of one or more sensing sensors 3 one or more of the following driving behavior parameters:
   ∘ vehicle acceleration times;
   ∘ braking times;
   ∘ sharp turns;
   ∘ compliance with speed limits;
   ∘ driving hours;
   ∘ type of roads driven;
- create an ideal twin digital profile 6 of the driver 2 with which are associated said detected driving behavior parameters and also one or more of the following personal data of driver 2:
   ∘ personal data of the driver 2;
   ∘ socio-economic data of the driver 2;
   ∘ data on past driving experience;
- detect, in a second time period following the first, one or more of the following driving behavior parameters:
   ∘ vehicle acceleration times;
   ∘ braking times;
   ∘ sharp turns;
   ∘ compliance with speed limits;
   ∘ driving hours;
   ∘ type of roads driven;
   ∘ use of electronic devices (e.g. cell phone) while driving.
- create an actual profile 7 of driver 2 (preferably in electronic format) with which are associated said driving behavior parameters collected during the second time period and also one or more of the following personal data of the driver 2:
   ∘ personal data of the driver 2;
   ∘ socioeconomic data of the driver 2.

Preferably, the electronic processor 4 receives driving parameter data of the driver 2 via a server 5 to which they are uploaded after being detected by the sensors 3.

The electronic processor 4 is further configured to perform the following additional steps:
- compare 8 said ideal twin digital profile 6 with said real profile 7 and detect differences at least with respect to one or more of the following parameters:
   ∘ vehicle acceleration times;
   ∘ braking times;
   ∘ sharp turns;
   ∘ compliance with speed limits;
   ∘ driving hours;
   ∘ type of roads driven;
- update the data contained in said ideal twin digital profile 6 in accordance with these detected differences

In addition, in accordance with what has already been set forth for the method, the electronic processor 4 is configured to perform said step of comparing 8 said ideal twin digital profile 6 with said real profile 7 and assessing whether for one or more of said parameters the driver 2 has improved or worsened his or her driving behavior with respect to respective predetermined thresholds of improvement or deterioration.

In addition, the electronic processor 4 is configured to associate said actual profile 7 with a digital container containing assigned points for each drive; said electronic processor 4 being further configured to increase or decrease the points contained in said digital container according to said evaluation regarding whether for one or more of said parameters the driver 2 has improved or worsened his or her driving behavior

Finally, said step of detecting the driving detection parameters is done through an electronic terminal such as a smartphone or through an electronic device integrated into the car.

The present invention achieves the following advantages.

Advantageously, the creation of the ideal twin digital profile 6 enables to keep a check on driving style variations that may affect a driver 2.

In addition, the present invention enables to monitor driving style more efficiently and assigning points more accurately.

## Claims

1. Method of detecting and monitoring the driving behavior of a driver (2) of a vehicle, comprising the following operational steps:
- detecting, in an first predefined period of time, through one or more sensors (3), one or more of the following driving behavior parameters:
∘ vehicle acceleration times;
∘ braking times;
∘ sharp turns;
∘ compliance with speed limits;
∘ driving hours;
∘ type of roads traveled;
∘ use of electronic devices while driving;
- creating an ideal twin digital profile (6) of the driver (2) to which are associated said detected driving behavior parameters and also one or more of the following personal data of the driver (2):
∘ demographic data of the driver (2);
∘ socio-economic data of the driver (2);
∘ past driving experience data;
∘ detect, in a second time period following the first, one or more of the following driving behavior parameters:
∘ vehicle acceleration times;
∘ braking times;
∘ sharp turns;
∘ compliance with speed limits;
∘ driving hours;
∘ type of roads traveled;
- creating a real profile (7) of the driver (2) with which are associated said parameters of driving behavior detected during the second time period and also one or more of the following personal data of the driver (2):
∘ demographic data of the driver (2);
∘ socio-economic data of the driver (2);
said method being **characterized in that** it includes the following additional steps:
- comparing (8) said ideal twin digital profile (6) with said real profile (7) and detect differences at least with respect to one or more of the following parameters:
∘ vehicle acceleration times;
∘ braking times;
∘ sharp turns;
∘ compliance with speed limits;
∘ hours of driving;
∘ type of roads driven;
∘ use of electronic devices while driving;
- updating the data contained in said ideal twin digital profile (6) according to said detected differences.

2. Method according to claim 1 **characterized in that** said step of comparing (8) said ideal twin digital profile (6) with said real profile (7) involves assessing whether for one or more of said parameters the driver (2) has improved or worsened his or her driving behavior with respect to respective predetermined thresholds of improvement or deterioration.

3. Method according to claim 2 **characterized in that** said actual profile (7) is assigned a virtual storage which contains points assigned for each drive, the method comprising increasing or decreasing the points contained in said digital storage container according to said evaluation related to whether for one or more of said parameters the driver (2) has improved or worsened his or her driving behavior

4. Method according to any one of the preceding claims **characterized in that** said step of detecting driving detection parameters is via an electronic terminal such as a smartphone or via an electronic device integrated into the car.

5. Method according to any one of the preceding claims **characterized in that** the ideal twin digital profile (6) of the driver (2) also contains reference data related to socio-demographic characteristics of the driver.

6. System for detecting and monitoring the driving behavior of a driver (2) of a vehicle comprising an electronic processor (4) configured for:
- detecting, in an first predefined period of time, through one or more sensors (3), one or more of the following driving behavior parameters:
∘ vehicle acceleration times;
∘ braking times;
∘ sharp turns;
∘ compliance with speed limits;
∘ driving hours;
∘ type of roads traveled;
∘ use of electronic devices while driving;
- creating an ideal twin digital profile (6) of the driver (2) with which are associated said detected driving behavior parameters and also one or more of the following personal data of the driver (2):
∘ demographic data of the driver (2);
∘ socio-economic data of the driver (2);
∘ data on past driving experience;
- detecting, in a second time period following the first, one or more of the following driving behavior parameters:
∘ vehicle acceleration times;
∘ braking times;
∘ sharp turns;
∘ adherence to speed limits;
∘ driving hours;
∘ type of roads driven;
∘ use of electronic devices while driving;
- creating an actual profile (7) of the driver (2) with which are associated said driving behavior parameters detected during the second time period and also one or more of the following personal data of the driver (2):
∘ demographic data of the driver (2);
∘ socio-economic data of the driver (2);
- said system being **characterized in that** the electronic processor (4) is further configured to perform the following additional steps:
- comparing (8) said ideal twin digital profile (6) with said real profile (7) and
- detecting differences at least with respect to one or more of the following parameters:
∘ vehicle acceleration times;
∘ braking times;
∘ sharp turns;
∘ compliance with speed limits;
∘ driving hours;
∘ type of roads driven;
- updating the data contained in said ideal twin digital profile (6) according to said detected differences

7. System according to claim 6 **characterized in that** said electronic processor (4) is configured to perform said step of comparing (8) said ideal twin digital profile (6) with said real profile (7) provides for assessing whether for one or more of said parameters the driver (2) has improved or worsened his or her driving behavior with respect to respective predetermined thresholds of improvement or deterioration.

8. System according to claim 7 **characterized in that** said electronic processor (4) is configured to associate said actual profile (7) with a digital container containing assigned points for each drive; said electronic processor (4) being further configured to increase or decrease the points contained in said digital container according to said evaluation relative to whether for one or more of said parameters the driver (2) has improved or worsened his or her driving behavior.

9. System according to any one of claims 6 to 8 **characterized in that** said step of detecting driving parameters is via an electronic terminal such as a smartphone or via an electronic device integrated into the car.

10. System according to any of claims 6 to 9 **characterized in that** the ideal twin digital profile (6) of the driver (2) also contains reference data related to the socio-demographic characteristics of the driver.
